Europäisches Patentamt

European Patent Office

Office européen des brevets

(19)

(11) Numéro de publication: **0 369 898**
**A1**

## (12) DEMANDE DE BREVET EUROPEEN

(21) Numéro de dépôt: 89420401.5

(22) Date de dépôt: **19.10.89**

(51) Int. Cl.⁵: **A41H 37/08**

(30) Priorité: **21.10.88 FR 8814000**

(43) Date de publication de la demande:
**23.05.90 Bulletin 90/21**

(84) Etats contractants désignés:
**AT BE CH DE ES FR GB GR IT LI LU NL SE**

(71) Demandeur: **CERA FRANCE- COMPAGNIE D'EQUIPEMENT ROBOTIQUE APPLIQUEE (Société Anonyme)**
**Rue du 8 Mai**
**F-42390 Villars(FR)**

(72) Inventeur: **Combe, Robert**
**Le Pont Précieux**
**F-42600 Montbrison(FR)**
Inventeur: **Durand, Fernand**
**158 Route de Saint Etienne**
**F-42170 Saint Just Saint Rambert(FR)**
Inventeur: **Moulin, Serge**
**L'Ozon**
**F-42450 Sury Le Comtal(FR)**

(74) Mandataire: **de Beaumont, Michel**
**Cabinet Poncet 7, chemin de Tillier B.P. 317**
**F-74008 Annecy Cédex(FR)**

(54) **Procédé et dispositif pour réaliser une bretelle de vêtement telle qu'une bretelle de soutien-gorge.**

(57) La machine selon l'invention comprend un premier sous-ensemble permettant l'assemblage d'un ruban principal sur deux boucles et un second sous-ensemble pour l'assemblage d'un ruban auxiliaire. Le premier sous-ensemble comprend des supports de boucles (55, 56), une pince d'étirement longitudinal (12), un ensemble de soudure (51), et des doigts d'enfilage (13, 14, 18, 25, 28). L'ensemble supérieur portant les doigts d'enfilage supérieurs (13, 14, 25) et l'ensemble de soudure (51) est mobile en translation longitudinale sur des guides (58) du bâti (50), pour amener l'ensemble de soudure (51) en regard soit d'une enclume de coupe (24) soit d'une enclume de soudure (19).

Fig.23

# PROCEDE ET DISPOSITIF POUR REALISER UNE BRETELLE DE VETEMENT TELLE QU'UNE BRETELLE DE SOUTIEN-GORGE

La présente invention concerne un procédé et une machine permettant d'assembler des boucles et des rubans pour former une bretelle réglable de vêtement telle qu'une bretelle de soutien-gorge.

Les bretelles de soutien-gorge comprennent généralement un ruban principal, une première boucle à deux fentes, une seconde boucle et un ruban auxiliaire. Le ruban principal passe une première fois dans la boucle à deux fentes en traversant l'une et l'autre des deux fentes et en passant autour de la traverse centrale les séparant, puis passe dans la seconde boucle et revient dans la première boucle à deux fentes pour passer à nouveau, dans le même sens, autour de la traverse centrale. Le ruban auxiliaire passe dans la seconde boucle. Les deux extrémités de ruban auxiliaire sont soudées l'une à l'autre. L'extrémité de ruban principal forme une boucle soudée sur elle-même autour de la traverse centrale de première boucle à deux fentes. On réalise ainsi une bretelle de longueur réglable. La difficulté vient du fait qu'il faut passer plusieurs fois le ruban dans les fentes de boucles pour réaliser ladite bretelle, les passages de ruban étant des opérations longues et fastidieuses.

On a déjà cherché des moyens permettant l'enfilage automatique des rubans dans les boucles pour former la bretelle de soutien-gorge. Par exemple, le brevet FR-A-2 515 009 décrit un procédé et un dispositif pour cet enfilage automatique de rubans dans les boucles. Les essais ont montré que le procédé et le dispositif décrits dans ce document conduisent à des défauts de fonctionnement qui les rendent inopérants pour une production industrielle. Par exemple, le ruban n'est pas tenu pendant que l'on enfile les doigts d'enfilage pour passer le ruban dans les fentes de boucles. Il en résulte que les doigts d'enfilage produisent un coulissement symétrique du ruban dans les fentes de part et d'autre du doigt d'enfilage, de sorte que le doigt d'enfilage n'est généralement pas capable de faire coulisser l'extrémité libre de ruban jusqu'à la faire passer de l'autre côté de la fente. Les phases ultérieures du processus conduisent à un blocage du ruban dans les fentes, de sorte que les doigts ne peuvent plus passer dans les fentes et se brisent lors de leur actionnement.

Ce procédé et ce dispositif connus conduisent en outre à des défauts de soudure du ruban sur lui-même, soit parce que la soudure est réalisée par des moyens insuffisants, soit parce que le ruban n'est pas correctement positionné et maintenu lors de cette soudure.

Egalement, la structure de la machine décrite dans ce document, ainsi que le procédé de fonctionnement qui lui est associé, ne permettent pas de réaliser des bretelles de soutien-gorge dont la longueur est réglable dans une plage suffisante. Par exemple, l'encombrement de certains éléments mécaniques interdit de réaliser des bretelles de soutien-gorge très courtes.

Le procédé et le dispositif décrits dans ce document ne permettent pas l'assemblage d'une bretelle complète de soutien-gorge : le ruban auxiliaire doit être adapté par des opérations ultérieures, le procédé ne visant que l'assemblage du ruban principal sur les deux boucles.

Le document CE-A-1 547 578 décrit également un procédé et un dispositif pour l'enfilage automatique de rubans dans les boucles. Dans ce document, les boucles sont maintenues selon des plans verticaux, le ruban étant enfilé horizontalement. Dans un premier poste, le ruban est enfilé par une sorte d'aiguille dans une première fente d'une boucle à deux fentes, puis rabattu et passé dans la seconde fente par un doigt d'enfilage, et ensuite cousu sur lui-même. Dans un second poste, l'extrémité libre du ruban est enfilée par une seconde aiguille sur une seconde boucle, l'ensemble formé par la seconde aiguille, l'extrémité libre du ruban et la seconde boucle étant ensuite retourné puis amené par translation dans la seconde fente de la première boucle, l'extrémité libre du ruban étant ensuite déviée puis enfilée dans la première fente de première boucle par un doigt d'enfilage.

Ce procédé et ce dispositif obligent à des mouvements complexes de pièces mécaniques, et en particulier à un mouvement à la fois de rotation et de translation de la seconde aiguille pour enfiler l'extrémité libre de ruban dans la seconde boucle et retourner l'ensemble afin d'amener l'extrémité libre de ruban dans la première boucle. La complexité d'un tel mouvement augmente sensiblement le coût d'un tel dispositif, diminue sa fiabilité et sa rapidité. Aucune solution n'est donnée pour positionner correctement les boucles l'une par rapport à l'autre en fin de montage, et pour éviter les reprises manuelles ultérieures.

Le document US-A-3 587 947 décrit également un procédé et dispositif pour l'enfilage des rubans dans les boucles, selon lesquels les boucles sont tenues horizontalement selon deux positions décalées verticalement et horizontalement, et les rubans sont enfilés par des doigts d'enfilage passant simultanément dans les deux boucles. Aucun moyen n'est prévu pour solidariser le ruban à la traverse centrale de la première boucle, et la structure générale du dispositif ne le permettrait pas.

La présente invention a notamment pour but d'éviter les inconvénients des procédés et dispositifs connus, en proposant un nouveau procédé et un nouveau dispositif d'assemblage de bretelles de soutien-gorge permettant un fonctionnement sûr et fiable pour être utilisable pour une production en série de bretelles de soutien-gorge.

Un autre but de l'invention est de permettre la réalisation de bretelles de soutien-gorge dont la longueur peut être beaucoup plus courte que dans les procédés connus. A titre d'exemple, dans les procédés connus, on considère que la longueur minimale entre l'extrémité libre du ruban principal et la seconde boucle est de 270 millimètres environ ; par contre, avec le procédé et le dispositif de l'invention, on peut réaliser des bretelles dont la longueur entre l'extrémité libre de ruban principal et la seconde boucle est de l'ordre de 160 millimètres.

Un autre but de l'invention est de permettre la programmation automatique des longueurs de bretelles, sans aucun démontage d'outillage.

Un autre but de l'invention est de positionner correctement la seconde boucle tout en mettant à longueur la bretelle de soutien-gorge, de façon à éviter les reprises manuelles ultérieures. On a en effet constaté que, dans les dispositifs connus, la seconde boucle n'est pas positionnée en bout du premier ruban, mais au voisinage de la première boucle, ce qui nécessite de les séparer l'une de l'autre ultérieurement. Cet inconvénient est supprimé dans la présente invention.

Un autre but de l'invention est de réaliser le montage total de la bretelle de soutien-gorge, en adaptant le ruban supplémentaire dans la seconde boucle.

Pour atteindre ces objets ainsi que d'autres, le procédé selon l'invention comprend la succession des étapes suivantes :

a/ on introduit une première boucle à deux fentes dans un support fixe horizontal de première boucle en disposant les fentes transversalement par rapport au sens de dévidement longitudinal du ruban, et on introduit une seconde boucle dans un support horizontal de seconde boucle approprié disposé en amont du support de première boucle à deux fentes,

b/ on attrape, au moyen d'une pince mobile, la première extrémité du ruban de réserve, et on déplace longitudinalement ladite pince mobile d'une distance fixe déterminée pour faire passer le ruban au dessus de la première boucle à deux fentes et amener son extrémité au delà de ladite première boucle à deux fentes selon une longueur prédéfinie,

c/ on amène un doigt de maintien en appui de haut en bas sur le ruban pour le pincer contre la première fente de première boucle à deux fentes,

d/ on desserre la pince et on enfonce un premier doigt d'enfilage de haut en bas dans la seconde fente de première boucle à deux fentes pour introduire la première extrémité de ruban dans ladite seconde fente,

e/ on rabat cette première extrémité de ruban sous la première boucle à deux fentes, on introduit l'extrémité rabattue dans la première fente en enfonçant un second doigt d'enfilage de bas en haut dans ladite première fente,

f/ on soude la première extrémité de ruban sortant de la première fente sur la portion de ruban d'entrée entre une enclume de soudure et une sonde ultrasonore disposées au voisinage et en amont de la première boucle à deux fentes,

g/ on tire une longueur réglable de ruban au moyen d'un doigt mobile autour duquel passe une portion intermédiaire de ruban, la première extrémité de ruban étant retenue par la première boucle à deux fentes, le ruban de réserve étant freiné par un dispositif de freinage,

h/ on coupe le ruban, au moyen de la même sonde ultrasonore que l'on a déplacée longitudinalement vers l'amont de la distance voulue, et on introduit par un doigt d'enfilage de seconde boucle la seconde extrémité de ruban, selon une longueur prédéfinie, dans la seconde boucle maintenue horizontalement dans le support de seconde boucle,

i/ on effectue, entre la première boucle à deux fentes et l'ensemble formé par le ruban et la seconde boucle, un mouvement relatif de rotation d'axe transversal autour de la traverse centrale de première boucle à deux fentes, pour dégager la première fente de première boucle à deux fentes, et on amène la seconde extrémité de ruban contre la face de première boucle à deux fentes par laquelle sort le ruban, au voisinage de la première fente,

j/ on amène un doigt de maintien en appui sur le ruban pour le plaquer contre la seconde fente de première boucle à deux fentes, et on enfonce un troisième doigt d'enfilage dans la première fente pour introduire la deuxième extrémité de ruban dans ladite première fente, on rabat ladite seconde extrémité de ruban de l'autre côté de ladite première boucle en direction de la seconde fente, on introduit l'extrémité rabattue dans la seconde fente en enfonçant un quatrième doigt d'enfilage dans ladite seconde fente,

k/ on éjecte l'ensemble ainsi réalisé.

Selon un mode de réalisation avantageux :
- au cours de l'étape g/, le doigt transversal est déplacé longitudinalement par dessus la première boucle à deux fentes entre une première position amont et une seconde position aval,
- l'étape i/ s'effectue par déplacement longitudinal de la seconde boucle par dessus la première boucle à deux fentes jusqu'à une position située en aval de la première boucle à deux fentes.

Un dispositif pour la mise en oeuvre de ce procédé comprend, selon un mode de réalisation, un bâti, une réserve de ruban, une réserve de premières boucles à deux fentes, une réserve de secondes boucles, un premier support horizontal pour le maintien d'une première boucle à deux fentes, un premier support horizontal pour le maintien d'une seconde boucle, des moyens pour amener des boucles à partir des réserves de boucles dans les supports de boucles, une pince mobile actionnée par un moyen d'entraînement pour attraper l'extrémité de ruban en sortie de réserve de ruban et l'amener selon une trajectoire longitudinale au-delà du premier support de première boucle à deux fentes, deux doigts supérieurs d'enfilage de ruban et deux doigts inférieurs d'enfilage de ruban, à déplacement vertical, disposés en regard des deux fentes de la première boucle à deux fentes de part et d'autre de ladite boucle, des moyens pour entraîner les doigts d'enfilage en mouvements de translation verticale généralement perpendiculaire à la première boucle, des doigts de rabattement pour rabattre l'extrémité de ruban sous la première boucle à deux fentes entre la seconde et la première fente, des moyens pour souder le ruban autour de la branche centrale de première boucle à deux fentes et des moyens pour couper le ruban. Selon l'invention :
- le premier support de première boucle à deux fentes est fixe en position longitudinale sur le bâti,
- les moyens pour souder le ruban comprennent une sonde ultrasonore mobile en déplacement longitudinal parallèlement à la direction de déplacement du ruban entre une position de soudure dans laquelle la sonde ultrasonore est disposée au voisinage du premier support de première boucle à deux fentes en regard d'une enclume de soudage et une position de coupe dans laquelle la sonde ultrasonore est disposée au voisinage et en amont du premier support de seconde boucle en regard d'une enclume de coupe, la même sonde ultrasonore assurant successivement les fonctions d'organe de soudure et d'organe de coupe,
- un doigt horizontal transversal à déplacement longitudinal est entraîné par des moyens d'entraînement longitudinal entre une première position dans laquelle le doigt occupe une zone intermédiaire entre les deux premiers supports de boucles et une seconde position dans laquelle le doigt est en aval du premier support de première boucle à deux fentes, la seconde position du doigt transversal étant réglable par déplacement longitudinal en fonction de la longueur de bretelle à réaliser.

D'autres objets, caractéristiques et avantages de la présente invention ressortiront de la description suivante de modes de réalisation particuliers, faite en relation avec les figures jointes, parmi lesquelles :

- la figure 1 représente une vue de côté d'une bretelle de soutien-gorge;
- la figure 2 représente une vue de dessus de la même bretelle de soutien-gorge ;
- les figures 3 à 14 illustrent le procédé d'assemblage du premier ruban sur la première et la seconde boucles ;
- les figures 15 à 17 illustrent la mise à longueur du premier ruban de bretelle ;
- les figures 18 à 22 illustrent l'assemblage du ruban auxiliaire sur l'ensemble formé par le ruban principal et les deux boucles ;
- la figure 23 est une vue de face du premier sous-ensemble de dispositif selon la présente invention, pour l'assemblage du ruban principal et des deux boucles ;
- la figure 24 est une vue schématique de côté du dispositif de la figure 23, montrant les moyens d'entraînement en translation verticale des doigts d'enfilage ;
- la figure 25 est une vue schématique d'arrière montrant les moyens d'entraînement en translation verticale des doigts d'enfilage ;
- la figure 26 illustre schématiquement la structure générale du dispositif de l'invention, avec une première partie pour l'assemblage du ruban principal sur les deux boucles, et une seconde partie pour l'adaptation du ruban auxiliaire ;
- la figure 27 est une vue de face du second sous-ensemble de dispositif, permettant l'adaptation du ruban auxiliaire ;
- la figure 28 illustre schématiquement les profils de sonde ultrasonore et d'enclumes du premier sous-ensemble ;
- les figures 29 à 31 illustrent un détail de réalisation des moyens de coupe et d'étirement de ruban ;
- la figure 32 illustre schématiquement un dispositif de traction du ruban pour le tendre avant soudure.

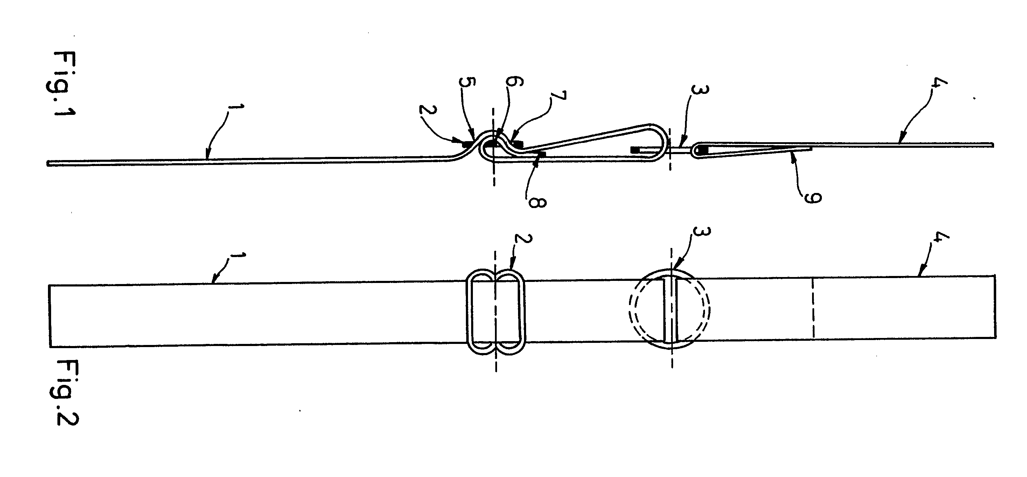

Les figures 1 et 2 représentent une bretelle de soutien-gorge pouvant être assemblée par un dispositif et selon un procédé de la présente invention. Cette bretelle comprend un ruban principal 1 passant dans une première boucle à deux fentes 2 et dans une seconde boucle 3, et un ruban auxiliaire 4 passant dans la seconde boucle 3. Comme le représentent les figures, le ruban principal 1 passe dans une première fente 5 de la première boucle à deux fentes 2, contourne la traverse intermédiaire 6 et passe dans la seconde fente 7 de la première boucle à deux fentes, traverse une fente de la seconde boucle 3, et revient passer autour de la traverse 6 de la première boucle à deux fentes 2 dans le même sens que son premier passage, entre ladite traverse intermédiaire 6 et la première partie de ruban principal 1. La première extrémité 8 de ruban principal 1 est soudée contre la partie de ruban principal 1 provenant de la seconde boucle 3. Le ruban auxiliaire 4 passe dans une fente de la seconde boucle 3, et sa première extrémité 9 est soudée contre la partie opposée de ruban auxiliaire 4.

On conçoit que l'opération consistant à enfiler les rubans dans les boucles est relativement longue et fastidieuse, et que cette opération est en outre délicate car elle dépend fortement des conditions de glissement entre les rubans et les boucles. On est donc conduit à rechercher des moyens permettant l'enfilage des rubans dans les boucles, moyens qui permettent cet enfilage pour des structures de rubans diverses, lisses ou rugueuses, larges ou étroites.

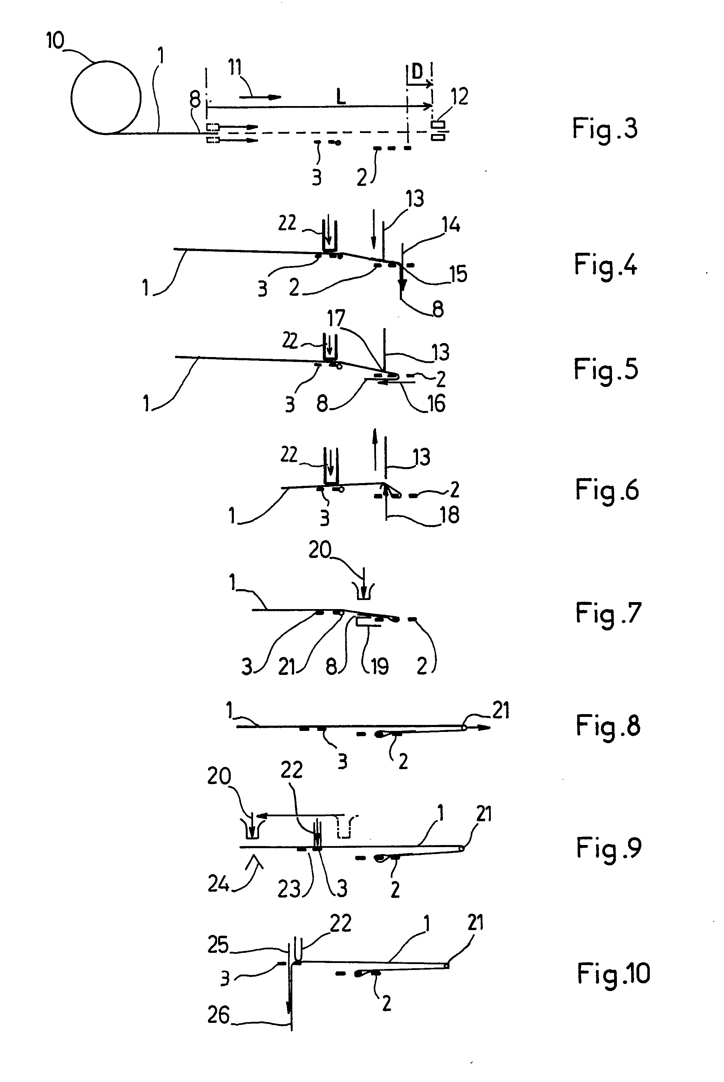

Les figures 3 à 14 illustrent le procédé permettant l'assemblage du ruban principal 1 sur la première boucle à deux fentes 2 et sur la seconde boucle 3, à partir d'une réserve 10 de ruban à dévidement longitudinal, d'une réserve de premières boucles à deux fentes et d'une réserve de secondes boucles.

Sur la figure 3, on introduit une première boucle à deux fentes 2 sur un support fixe, non représenté, maintenant la première boucle à deux fentes en une position horizontale, les fentes étant disposées transversalement par rapport au sens de dévidement longitudinal 11 du ruban. On introduit une seconde boucle 3 dans un support horizontal de seconde boucle approprié, non représenté, disposé en amont du support de première boucle à deux fentes. On attrape, au moyen d'une pince mobile 12, la première extrémité 8 du ruban de réserve, et on déplace longitudinalement ladite pince mobile 12 d'une distance fixe L déterminée pour faire passer le ruban principal 1 au-dessus de la première boucle à deux fentes 2 et amener son extrémité au-delà de ladite première boucle à deux fentes 2 selon une longueur prédéfinie D.

Sur la figure 4, on déplace un doigt de maintien 13 de haut en bas pour l'amener en appui sur le ruban 1, le doigt de maintien venant pincer le ruban 1 contre la première fente 17 de première boucle à deux fentes 2. Le doigt de maintien 13 évite ainsi le glissement longitudinal du ruban 1 sur la première boucle à deux fentes 2. Simultanément, pour améliorer ce maintien, un premier serre-flanc 22 peut être amené en appui sur le ruban 1 pour le pincer contre la seconde boucle 3. Le serre-flanc 22 peut être maintenu jusqu'à l'étape de soudure qui sera décrite ultérieurement en relation avec la figure 7. On desserre la pince 12 pour libérer la première extrémité 8 du ruban 1, et on enfonce un premier doigt d'enfilage 14 de haut en bas dans la seconde fente 15 de première boucle à deux fentes 2 pour introduire ladite première extrémité 8 de ruban dans ladite seconde fente 15. A l'issue de cette opération, l'extrémité 8 de ruban 1 pend au-dessous de la première boucle à deux fentes 2.

Sur la figure 5, un moyen de rabattement 16 rabat la première extrémité 8 de ruban sous la première boucle à deux fentes 2 en direction de l'amont, de sorte que la partie dépassante de ruban 1 est disposée en travers de la première fente 17 de première boucle à deux fentes 2.

Sur la figure 6, on enfonce un second doigt d'enfilage 18 dans la première fente 17 de seconde boucle à deux fentes 2, de bas en haut, pour introduire l'extrémité rabattue de ruban dans ladite première fente 17. Pendant cette opération, le ruban 1 est maintenu sous une légère tension par la réserve 10 de ruban, qui autorise un allongement suffisant du ruban 1 pour permettre l'introduction totale de la partie dépassante de ruban dans la première fente 17 comme le représente la figure.

Sur la figure 7, on retire le second doigt d'enfilage 18, et le ruban 1 est à nouveau sous légère tension par l'effet de la réserve 10 de ruban. Selon un mode de réalisation avantageux, on tire le ruban 1 vers l'amont pour le faire coulisser autour de la traverse centrale 6 de première boucle à deux fentes 2 et ramener sa première extrémité 8 à proximité immédiate de la première boucle à deux fentes 2. L'intérêt est double : l'extrémité 8 du ruban est mieux centrée transversalement par rapport à la boucle 2 ; la soudure du ruban 1 s'effectue au plus près de la boucle 2. L'extrémité 8 de ruban repose sur une enclume de soudure 19, disposé en amont et à proximité du support de première boucle à deux fentes 2. On soude la première extrémité 8 de ruban 1 sortant de la première fente 17 sur la portion de ruban d'entrée 1 par pression entre ladite enclume de soudure 19 et une sonde ultrasonore 20, par déplacement de la sonde ultrasonore 20 de haut en bas pour l'amener en appui contre le ruban et le plaquer sur l'enclume de soudure 19. La sonde ultrasonore 20 est animée de mouvements vibratoires à fréquence ultrasonore de façon bien connue dans la technique de soudure par ultrasons. On retire ensuite la sonde ultrasonore 20 par déplacement vers le haut.

Dans le mode de réalisation représenté sur la figure 8, on tire une longueur réglable de ruban 1 au moyen d'un doigt transversal 21 à déplacement longitudinal, le doigt transversal 21 étant initialement en une position intermédiaire entre la première boucle à deux fentes 2 et la seconde boucle 3, dans un plan horizontal passant sensiblement par celui de la seconde boucle 3. Dans son déplacement longitudinal vers l'aval, le doigt transversal 21 passe au-dessus de la première boucle à deux fentes 2, de sorte qu'une portion intermédiaire de ruban 1 passe autour du doigt transversal 21 et se trouve étirée vers l'aval comme le représente la figure 8. Il en résulte que le doigt transversal 21 fait pivoter vers l'aval la portion de ruban attachée autour de la traverse 6 de première boucle à deux fentes 2, et dégage ainsi la fente amont de la première boucle à deux fentes 2 pour autoriser l'introduction ultérieure d'une autre portion de ruban 1 dans ladite fente amont. La position extrême du doigt transversal 21 vers l'aval est réglable, pour régler ainsi la longueur de ruban principal 1 qui sera utilisée pour la réalisation de la bretelle de soutien-gorge. Lors du déplacement du doigt transversal 21, le ruban 1 est légèrement freiné par la réserve 10 de ruban.

Sur la figure 9, on amène le premier serre-flan 22 en appui sur le ruban 1 pour le plaquer et le maintenir contre la seconde boucle 3 en aval de la fente 23 de seconde boucle 3. On évite ainsi le glissement du ruban 1 sur la seconde boucle 3 pendant les opérations ultérieures. On coupe le ruban 1 au moyen de la sonde ultrasonore 20 que l'on a préalablement déplacée longitudinalement vers l'amont de la distance voulue, la sonde ultrasonore 20 venant alors appliquer de haut en bas le ruban 1 contre une enclume de coupe 24.

Sur la figure 10, tout en maintenant le premier serre-flan 22 en appui sur le ruban 1, on introduit, par un doigt d'enfilage de seconde boucle 25, la seconde extrémité 26 de ruban 1 dans la seconde boucle 3 maintenue horizontalement dans le support de seconde boucle, cette opération pouvant débuter aussitôt après le début de l'opération de coupe représentée sur la figure 9.

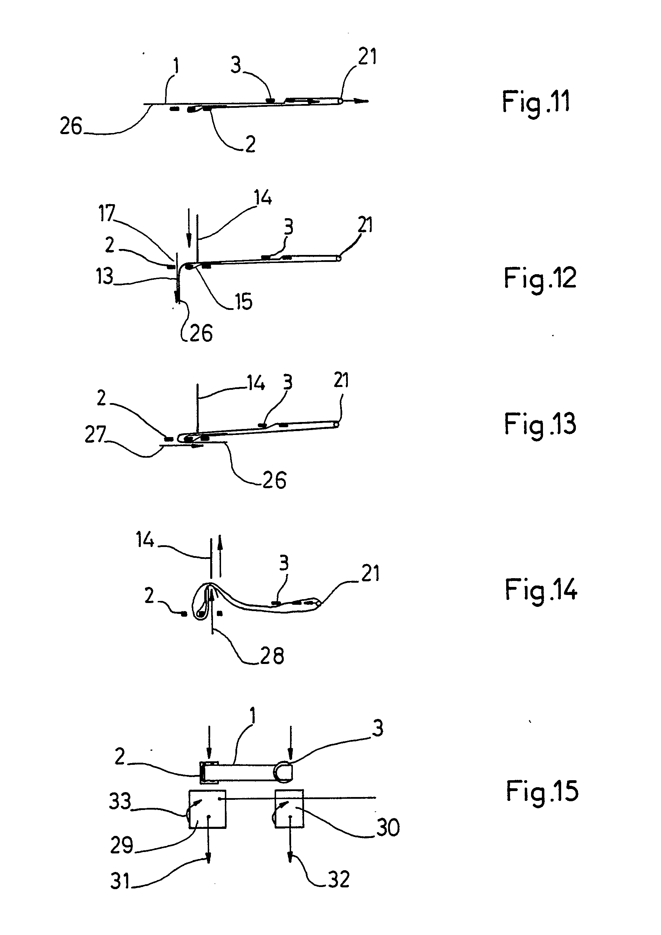

Dans le mode de réalisation représenté sur la figure 11, on déplace longitudinalement la seconde boucle 3 vers l'aval, tout en déplaçant longitudinalement le doigt transversal 21 vers l'aval, pour amener la seconde boucle 3 en une position aval par rapport à la première boucle à deux fentes 2, et pour amener la seconde extrémité 26 du ruban principal 1 au voisinage de la première boucle à deux fentes 2, le ruban étant posé sur ladite première boucle à deux fentes et la seconde extrémité 26 du ruban 1 dépassant en amont de ladite première boucle à deux fentes selon une longueur prédéterminée. Le déplacement de la seconde boucle 3 et du ruban 1 est choisi de façon que la portion de ruban 1 voisine de son extrémité libre vienne en face de la fente amont de première boucle à deux fentes 2. On a effectué ainsi un mouvement relatif de rotation d'axe transversal, autour de la traverse 6 de première boucle à deux fentes 2, entre ladite première boucle à deux fentes 2 et l'ensemble formé par le ruban 1 et la seconde boucle 3.

Sur la figure 12, on amène un doigt de maintien, par exemple le premier doigt d'enfilage 14, en appui sur le ruban 1 pour le plaquer contre la seconde fente 15 de première boucle à deux fentes 2, et on enfonce un troisième doigt d'enfilage, par exemple le premier doigt de maintien 13, dans la première fente 17 pour introduire la deuxième extrémité 26 de ruban dans ladite première fente 17.

Sur la figure 13, on repousse, par un moyen de rabattement 27 à déplacement longitudinal, la seconde extrémité 26 de ruban de l'autre côté de ladite première boucle à deux fentes 2 en direction de la seconde fente 15.

Sur la figure 14, on introduit l'extrémité rabattue 26 dans la seconde fente 15 en enfonçant un quatrième doigt d'enfilage 28 dans ladite seconde fente, et tout en produisant ou en autorisant le déplacement du doigt transversal 21 dans le sens produisant une détente du ruban 1 soit, selon ce mode de réalisation, vers l'amont en direction du premier support de première boucle 2, selon une distance appropriée. Pendant l'enfoncement du doigt d'enfilage 28, on retire vers le haut le premier doigt d'enfilage 14.

Les figures 15 à 17 illustrent la mise à longueur du ruban principal de bretelle de soutien-gorge, par coulissement dans les boucles 2 et 3. Sur la figure 15, on a représenté, en vue de dessus, l'ensemble formé par la première boucle à deux fentes 2, la seconde boucle 3 et le ruban principal 1 dans la position obtenue après l'étape de la figure 14. A partir de cette position, la première boucle à deux fentes 2 et la seconde boucle 3 sont transférées respectivement sur un support mobile 29 de première boucle à deux fentes et sur un support mobile 30 de seconde boucle. Les supports mobiles 29 et 30 sont déplaçables par translation transversale, comme le représentent les flèches 31 et 32.

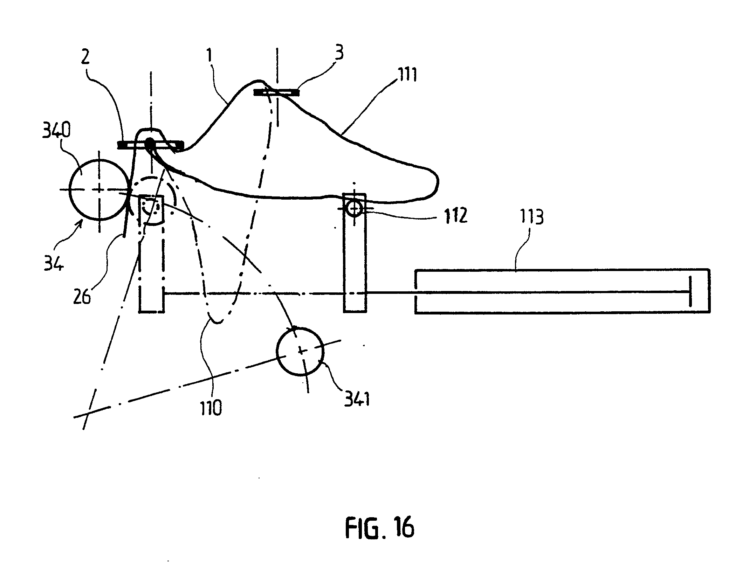

De plus, le support mobile 29 de première boucle à deux fentes 2 est orientable par pivotement autour d'un axe de rotation transversal, permettant le retournement complet à 180° de la première boucle à deux fentes 2. En position initiale, représentée sur la figure 15, la première boucle à deux fentes 2 est positionnée de telle manière que le ruban 1 sort des fentes par la face supérieure de boucle. Après retournement, dans le sens représenté par la flèche 33, la première boucle à deux fentes 2 est telle que le ruban sort par sa face inférieure, comme le représente la figure 16 à plus grande échelle.

Selon un mode de réalisation particulier, le support mobile 30 de seconde boucle 3 est également orientable par rotation selon un axe de rotation transversal, assurant le retournement simultané de la seconde boucle 3. Ce retournement n'est toutefois pas nécessaire lorsque l'on veut simplement assurer la mise à longueur de la bretelle, sans adaptation d'un ruban auxiliaire.

Après retournement, dans la position de la figure 16, la seconde extrémité 26 de ruban est pendante au-dessous de la première boucle à deux fentes 2, et se trouve ainsi libérée et accessible. Le ruban 1 forme, entre les deux boucles 2 et 3, une nappe supérieure relativement tendue entre les deux boucles, et une nappe inférieure qui pend de manière relativement lâche au-dessous des boucles. Sur la figure, on a représenté cette position de nappe inférieure par le trait mixte désigné par la référence 110. Cette nappe inférieure constitue un obstacle gênant pour l'étirement ultérieur de l'extrémité 26 du ruban 1. Pour éviter cet inconvénient, on déplace cette nappe inférieure 110 par un doigt transversal 112, positionné initialement au voisinage de la première boucle à deux fentes 2 comme le représente en trait mixte la figure 16, le doigt 112 étant déplacé latéralement par un vérin 113 l'amenant en position représentée en trait plein sur la figure, position dans laquelle il supporte la nappe inférieure 111 du ruban 1.

Lorsque la nappe inférieure du ruban 1 a pris la position 111, écartée de l'extrémité 26 du ruban, on déplace un rouleau mobile 341 en direction d'un rouleau moteur à axe rotatif fixe 340 pour pincer l'extrémité 26 du ruban 1 entre lesdits rouleaux 340 et 341.

On tire la seconde extrémité 26 de ruban par rotation des rouleaux 340 et 341 constituant ensemble un moyen de traction 34, pour mettre le ruban à longueur, tout en retenant la seconde boucle 3 à l'écart de la première boucle à deux fentes 2.

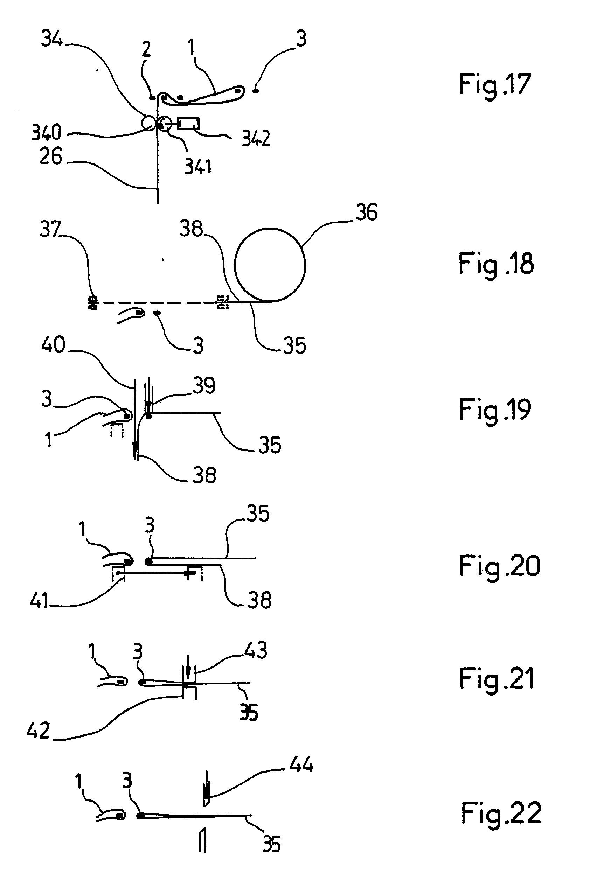

La figure 17 représente schématiquement le dispositif en fin d'étirement, lorsque le ruban est à la longueur voulue. Le rouleau mobile 341 peut alors être ramené en position escamotée par le vérin 342, et le doigt 112 retourne ultérieurement en position d'attente repoussé par le vérin 113.

Lorsque l'on ne désire pas assembler un ruban auxiliaire, l'opération est alors terminée et l'on peut éjecter l'ensemble formé par le ruban et les deux boucles. Par contre, lorsque l'on veut assembler un ruban auxiliaire, les opérations se poursuivent comme cela est exposé ci-après.

Sur la figure 18, on amène sur la seconde boucle 3 un élément supplémentaire, appelé TAB, et comportant un ruban auxiliaire 35 se déroulant à partir d'une réserve de ruban auxiliaire 36. On attrape, au moyen d'une seconde pince mobile 37, la première extrémité 38 du ruban auxiliaire 35, et on déplace longitudinalement ladite seconde pince mobile 37 pour faire passer le ruban auxiliaire 35 au-dessus de la seconde boucle 3.

Sur la figure 19, un second serre-flan 39 est abaissé de bas en haut et amené en appui sur le ruban auxiliaire 35 pour le plaquer et le maintenir contre la seconde boucle 3 entre la fente de ladite seconde boucle 3 et la réserve de ruban auxiliaire 36. On introduit alors l'extrémité 38 du ruban auxiliaire 35 dans la fente de seconde boucle 3 en enfilant un doigt d'enfilage auxiliaire 40 de haut en bas dans ladite fente de seconde boucle.

Sur la figure 20, on rabat l'extrémité 38 de ruban auxiliaire sous la seconde boucle 3 en direction de la réserve 36 par déplacement longitudinal d'un organe de rabattement 41.

Sur la figure 21, on soude ladite extrémité 38 de ruban auxiliaire 35 contre la portion d'entrée de ruban auxiliaire 35, entre une enclume auxiliaire 42 et une sonde ultrasonore auxiliaire 43.

Sur la figure 22, on coupe le ruban auxiliaire selon une longueur déterminée, par exemple par un massicot 44. La bretelle complète est alors réalisée, et peut être éjectée du dispositif.

Dans un mode de réalisation, l'organe de rabattement 41 est constitué par l'enclume auxiliaire 42, qui est, pour cela, rendue mobile longitudinalement entre une position de retrait représentée à gauche sur la figure 20 et une position de fonctionnement représentée à droite sur la figure 21.

Pour la mise en oeuvre du procédé illustré par les figures 3 à 22, la machine selon la présente invention comprend de façon générale deux sous-ensembles : le premier sous-ensemble réalise les étapes des figures 3 à 14, pour l'assemblage du ruban principal 1 sur les boucles 2 et 3 ; le second sous-ensemble réalise d'une part la mise à longueur, selon les étapes des figures 15 à 17, et d'autre part l'assemblage du ruban auxiliaire 35 selon les étapes des figures 18 à 22.

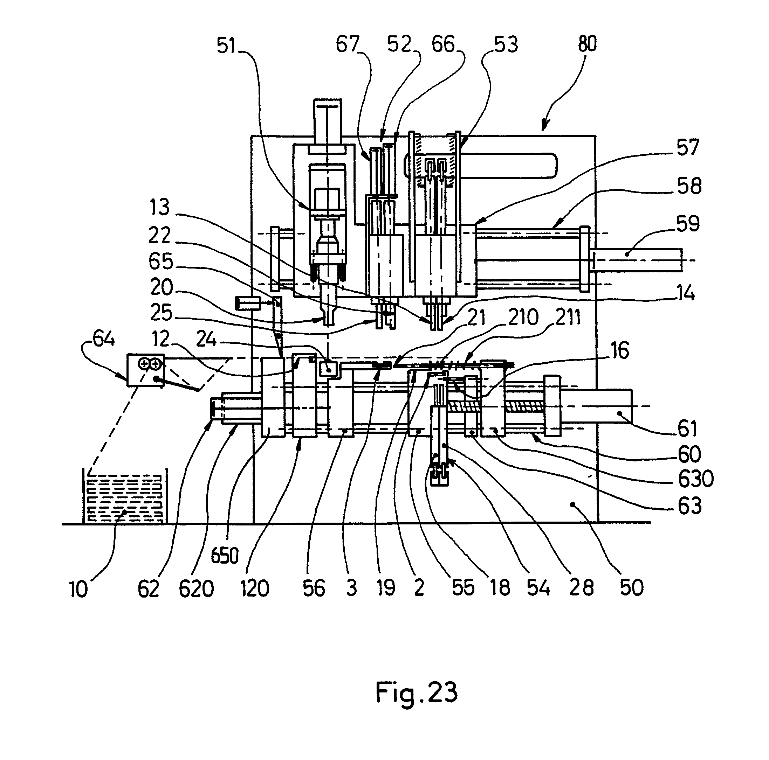

La figure 23 illustre les principaux organes fonctionnels du premier sous-ensemble de la machine selon l'invention.

La machine comprend un bâti 50 sur lequel sont montés les organes fonctionnels, et notamment un ensemble de soudure 51, un ensemble d'enfilage de seconde boucle 52, un ensemble supérieur d'enfilage de première boucle 53, un ensemble inférieur d'enfilage de première boucle 54, un ensemble support de première boucle 55, un ensemble support de seconde boucle 56.

L'ensemble de soudure 51, l'ensemble d'enfilage de deuxième boucle 52 et l'ensemble supérieur d'enfilage de première boucle 53 sont tous trois montés sur un chariot 57 coulissant sur des guides longitudinaux 58 du bâti 50. Un vérin 59 commande le déplacement et la position du chariot 57 le long des guides longitudinaux 58.

L'ensemble inférieur d'enfilage de première boucle 54 et l'ensemble support de première boucle 55 sont fixes en position longitudinale sur le bâti. L'ensemble support de seconde boucle 56 est monté sur des guides longitudinaux inférieurs 60 du bâti 50, et sa position est commandée par le vérin 620. Le doigt transversal 21 à déplacement longitudinal, qui assure l'étirement et la mise à longueur du ruban, est solidaire d'un chariot 630 monté à coulissement sur des guides longitudinaux du bâti 50 et commandé par un vérin à vis sollicité par le moteur 61. Cette disposition permet un réglage rapide multipositions du doigt transversal 21.

Dans le mode de réalisation représenté sur la figure 23, le doigt transversal 21 d'étirement est monté en bout d'une tige 210 qui coulisse dans un alésage longitudinal du chariot 630. Le coulissement de la tige 210 est limité par deux butées, et la tige est sollicitée en direction de l'amont par un ressort hélicoïdal de compression 211. Cette disposition a une double fonction :
- lorsque l'on veut réaliser une bretelle courte, le support de seconde boucle 56 est proche du support de première boucle 55 dans sa position initiale, et repousse lui-même le doigt transversal d'étirement 21 à l'encontre de la poussée exercée par le ressort 211, le doigt 21 restant en appui contre le support de première boucle 55 tant qu'il n'est pas sollicité par son vérin et son moteur 61 ;
- lors du mouvement de translation longitudinale du support de seconde boucle 36 et du doigt transversal 21 d'étirement, cette disposition autorise des vitesses et courses de déplacement différentes des deux éléments commandés respectivement par le moteur 61 et par le vérin 620.

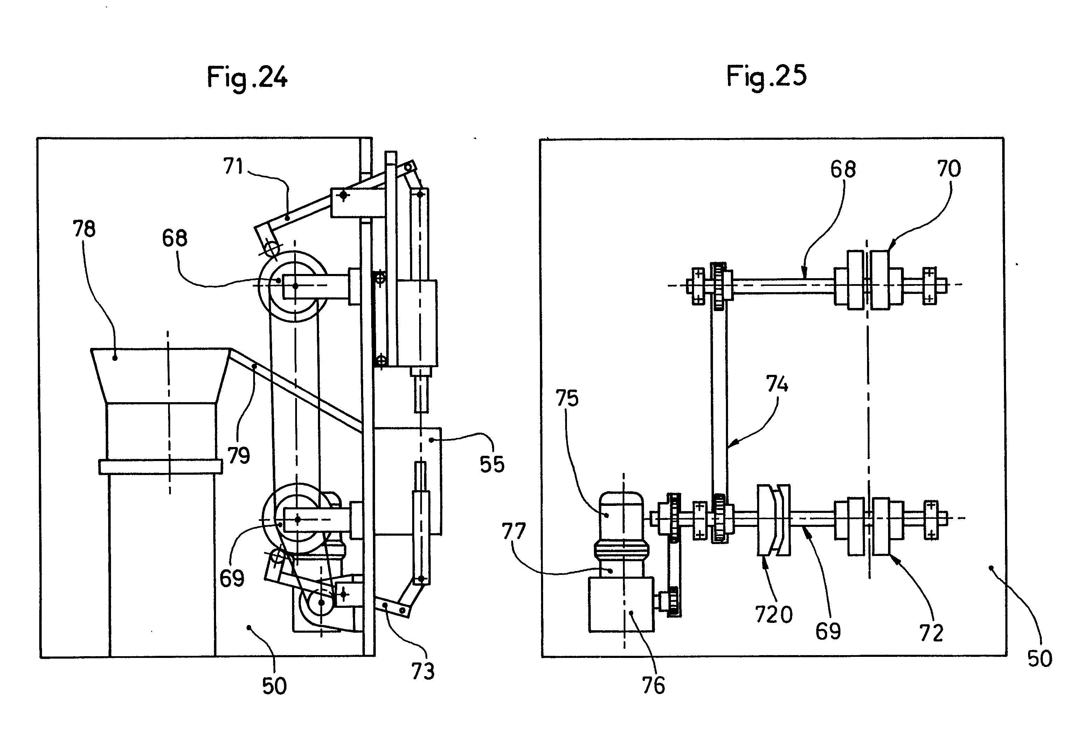

On a représenté, sur la figure, une première boucle à deux fentes 2, en position sur son ensemble support de première boucle 55, et une seconde boucle 3 en position sur son ensemble support de seconde boucle 56. On remarque que la première boucle 2 occupe une position légèrement inférieure à la seconde boucle 3. L'ensemble support de première boucle 55 porte également l'enclume de soudure 19. Le premier moyen de rabattement 16 est un doigt transversal, solidaire d'un chariot 63 à coulissement longitudinal commandé par une came cloche 720 représentée sur la figure 25. Le doigt transversal 16 est disposé au-dessous et à proximité de la première boucle 2.

L'enclume de coupe 24, montée fixe sur le bâti 50, occupe une position en amont des deux supports de boucles 56 et 55.

En sortie de la réserve de ruban principal 10, le ruban principal 1 passe dans des moyens de guidage schématiquement représentés 64, et dans un dispositif anti-retour 65.

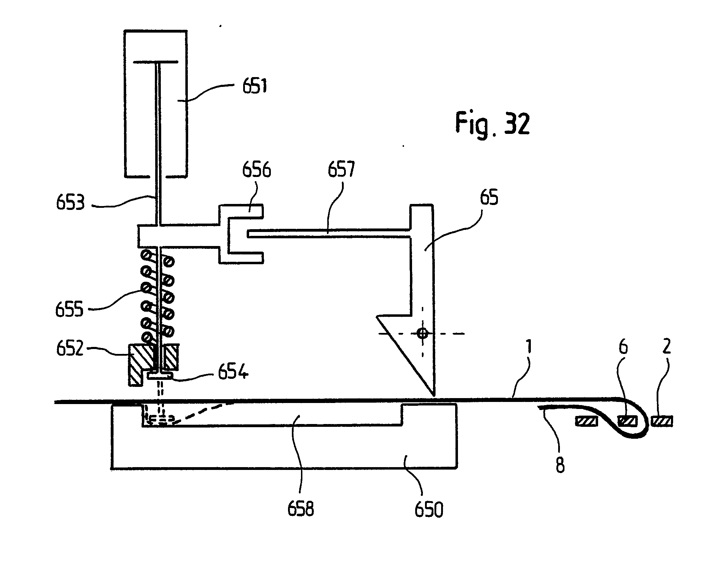

Dans un mode de réalisation avantageux illustré par la figure 32, le dispositif anti-retour 65 est associé à des moyens permettant de tirer et de tendre le ruban 1 vers l'arrière avant sa soudure autour de la traverse centrale 6 de la première boucle à deux fentes 2. Dans ce mode de réalisation, le dispositif anti-retour 65 pince le ruban 1 contre une plaque de base 650, en amont du support de première boucle à deux fentes 2. Un vérin 651 commande la descente d'un serre-flan d'entrée 652, disposé en amont du dispositif anti-retour 65, le serre-flan 652 venant pincer le ruban 1 contre la plaque de base 650, venant ainsi bloquer le ruban 1. Le serre-flan 652 est monté coulissant sur la tige de sortie 653 du vérin 651, et est repoussé vers le bas contre une butée 654 d'extrémité de tige par un ressort 655. En position de blocage, le serre-flan 652 reste ainsi en appui élastique contre le ruban 1. Simultanément, une fourche 656, solidaire de la tige 653, actionne un levier 657 provoquant le basculement du dispositif anti-retour 65 qui libère alors le ruban 1. La tige 653 poursuit sa descente sous l'impulsion du vérin 651, passant à travers le serre-flan 652, et la butée 654 vient repousser une portion de ruban 1 vers le bas dans une cavité 658 de la plaque de base 650. La poussée de partie intermédiaire de ruban 1 par la butée 654, alors que la partie amont du ruban est bloquée par le serre-flan 652, produit une traction de la zone de première extrémité 8 du ruban 1 vers l'amont, la zone de première extrémité du ruban 1 coulissant alors autour de la traverse centrale 6 de la première boucle à deux fentes 2, la première extrémité 8 de ruban tendant à se rapprocher de la première boucle à deux fentes 2. Cette opération permet d'améliorer sensiblement la qualité de la soudure de première extrémité 8 du ruban 1.

En considérant à nouveau la figure 23, la pince d'étirement 12 est solidaire d'un chariot 120 monté à coulissement sur des guides longitudinaux du bâti 50, et commandé par le vérin 62 entre une position d'attente, représentée sur la figure, dans laquelle la pince 12 est au voisinage du dispositif anti-retour 65, et une position d'étirement dans laquelle la pince 12 est en aval de l'ensemble support de première bande 55.

Le chariot 57 peut se déplacer le long des guides 58 longitudinaux entre une première position, représentée sur la figure, dans laquelle la sonde ultrasonore 20, portée par l'ensemble de soudure 51, est en face de l'enclume de coupe 24, et une seconde position, non représentée, dans laquelle la sonde ultrasonore 20 est en regard de l'enclume de soudure 19. La sonde ultrasonore 20 peut être déplacée verticalement sur l'ensemble de soudure 51, entre une première position de retrait représentée sur la figure 23 et une position de fonctionnement dans laquelle la sonde ultrasonore 20 est en appui contre l'enclume correspondante ou contre le ruban posé sur ladite enclume.

L'ensemble d'enfilage de seconde boucle 52 comprend d'une part le premier serre-flan 22, actionné verticalement par un vérin de serre-flan 66 et d'autre part le doigt d'enfilage de seconde boucle 25, actionné lui-même verticalement par le vérin 67.

L'ensemble supérieur d'enfilage de première boucle 53 comprend le premier doigt d'enfilage 14 et le doigt de maintien 13 ou troisième doigt d'enfilage, animés chacun d'un mouvement de translation verticale commandé par des cames qui seront décrites plus loin.

L'ensemble inférieur d'enfilage de première boucle 54 comprend le second doigt d'enfilage 18 et le quatrième doigt d'enfilage 28, animés chacun d'un mouvement de translation verticale commandé par des cames.

Les organes fonctionnels représentés sur la figure 23 sont commandés par les vérins et les cames pour produire les mouvement décrits précédemment en relation avec les figures 3 à 14. Les mouvements de vérins peuvent être obtenus par tous moyens à la portée de l'homme du métier. On décrira ci-dessous quelques détails de réalisation des entraînements de doigts d'introduction au moyen des cames.

Dans le mode de réalisation représenté sur les figures 24 et 25, l'entraînement en translation verticale des doigts d'enfilage est assuré par des cames portées par un arbre d'entraînement supérieur 68 et par un arbre d'entraînement inférieur 69. Les deux arbres d'entraînement 68 et 69 sont parallèles l'un à l'autre et disposés selon une direction longitudinale, tourillonnant dans des paliers solidaires du bâti 50. L'arbre supérieur 68 porte des cames 70 sur lesquelles viennent porter des leviers 71 d'actionnement des doigts d'enfilage 13 et 14. L'arbre inférieur 69 porte des cames 72 sur lesquelles viennent porter des leviers 73 d'actionnement des doigts d'enfilage 18 et 28 inférieurs, et porte la came cloche 720 d'actionnement du chariot 63 solidaire du doigt transversal 16. L'arbre supérieur 68 et l'arbre inférieur 69 sont rendus solidaires en rotation l'un de l'autre par une chaîne 74 montée sur deux roues dentées solidaires respectivement de l'un et l'autre des arbres. L'arbre inférieur 69 est entraîné en rotation par un ensemble d'entraînement comprenant un moteur électrique 75, un réducteur 76 et une cellule embrayage- frein 77. La cellule embrayage-frein 77 autorise la rotation permanente du moteur 75 et la commande rapide d'entraînement et d'arrêt des arbres 68 et 69 pendant une fraction du cycle de fonctionnement, fraction correspondant par exemple au déplacement longitudinal du support de seconde boucle 56 lors des phases de procédé représentées sur la figure 11. Cette disposition permet de commander efficacement les doigts d'enfilage par des cames de 360˚.

On remarque également, sur la figure 24, une réserve de boucle 78 schématiquement représentée, reliée à l'ensemble support de première boucle 55 par des guides d'amenée de boucles 79. Les boucles peuvent être stockées, amenées et sélectionnées par tout moyen connu, tel que des bois vibrants.

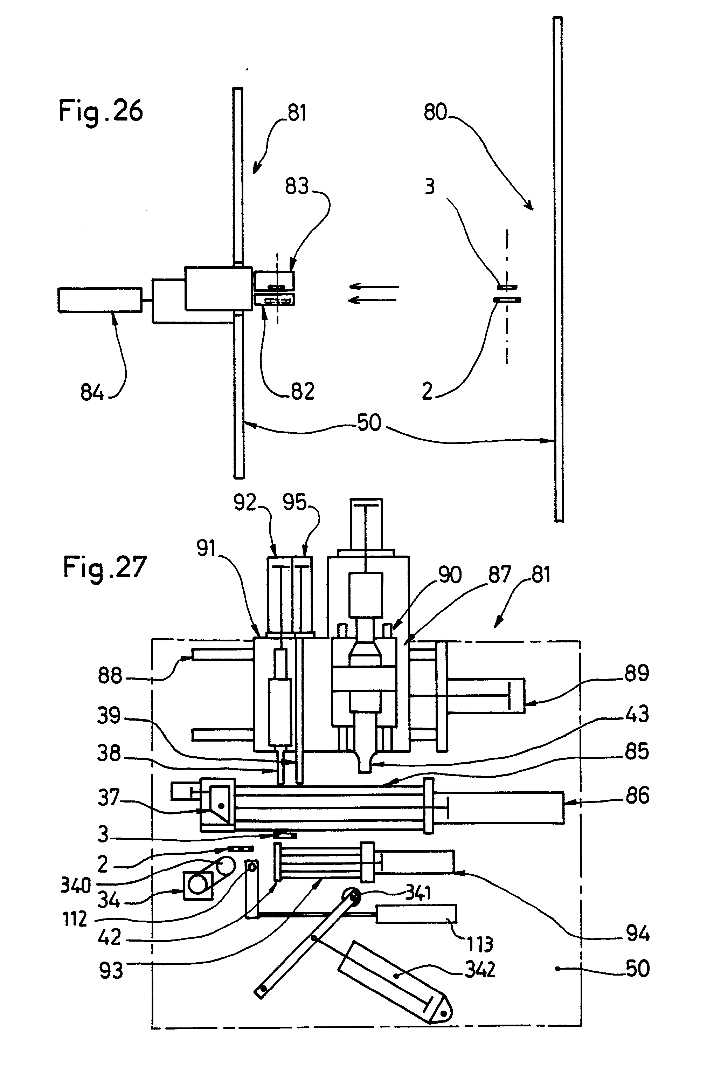

La figure 26 illustre schématiquement les deux principaux sous-ensembles de la machine selon l'invention, à savoir le sous-ensemble 80 d'assemblage de ruban principal 1 sur les boucles 2 et 3 tel qu'il a été décrit sur la figure 23, et un sous-ensemble 81 d'étirement de ruban principal et d'assemblage du ruban auxiliaire. En fin d'assemblage du ruban principal 1 sur les boucles 2 et 3, les boucles 2 et 3 sont maintenues dans le premier sous- ensemble 80. Le transfert des boucles 2 et 3 et du ruban principal 1 dans le second sous-ensemble 81 s'effectue par des supports mobiles, respectivement un support mobile de première boucle 29 et un support mobile de seconde boucle 30. Les supports mobiles sont entraînés en translation transversale par un vérin 84, entre une première position, représentée sur la figure 26, dans laquelle ils maintiennent les boucles 2 et 3 en position dans le second sous-ensemble 81, et une seconde position, non représentée sur la figure, dans laquelle ils sont au voisinage des supports de première boucle 55 et de seconde boucle 56 du premier sous-ensemble 80, pour recevoir les boucles qui sont éjectées par des moyens d'éjection non représentés en fin de cycle d'assemblage du ruban principal sur les boucles. Les supports mobiles 29 et 30 sont chacun orientables par pivotement autour d'un axe de rotation respectif transversal, permettant le retournement de l'une et l'autre des boucles 2 et 3.

Sur la figure 27, pour la clarté du dessin, on n'a pas représenté les supports mobiles 29 et 30, seules les première boucle 2 et seconde boucle 3 ont été figurées.

Comme le représente la figure, la pince auxiliaire 37 est montée à coulissement sur des guides longitudinaux 85 du bâti 50 et entraînée en translation longitudinale par un vérin 86. Un chariot auxiliaire 87, monté également sur des guides longitudinaux 88 du bâti, est entraîné en translation par un vérin 89. Le chariot 87 porte d'une part un ensemble de soudure auxiliaire 90 comprenant notamment la sonde ultrasonore auxiliaire 43, et porte l'ensemble d'enfilage auxiliaire 91 comprenant le doigt d'enfilage auxiliaire 38, le serre-flan auxiliaire 39, et leurs vérins respectifs d'actionnement vertical 92 et 95.

L'enclume de soudure auxiliaire 42 est montée à coulissement sur des guides longitudinaux 93 et entraînée en translation par un vérin 94. Le second sous-ensemble 81 peut ainsi, par les mouvements appro priés, remplir les fonctions décrites en relation avec les figures 18 à 22, pour l'assemblage d'un ruban auxiliaire sur l'ensemble formé par le ruban principal 1 et les boucles 2 et 3.

L'ensemble d'étirement ou de mise à longueur de ruban principal est globalement désigné sur la figure 27 sous la référence 34. Cet ensemble permet les fonctions décrites en relation avec les figures 15 à 17. L'ensemble 34 comprend le rouleau moteur à axe rotatif fixe 340, entraîné par un moteur schématiquement représenté, disposé à proximité du support de première boucle à deux fentes 2, et un second rouleau 341 mobile, disposé en bout d'un levier actionné par le vérin 342. On a également représenté le doigt transversal 112 et son vérin d'actionnement 113.

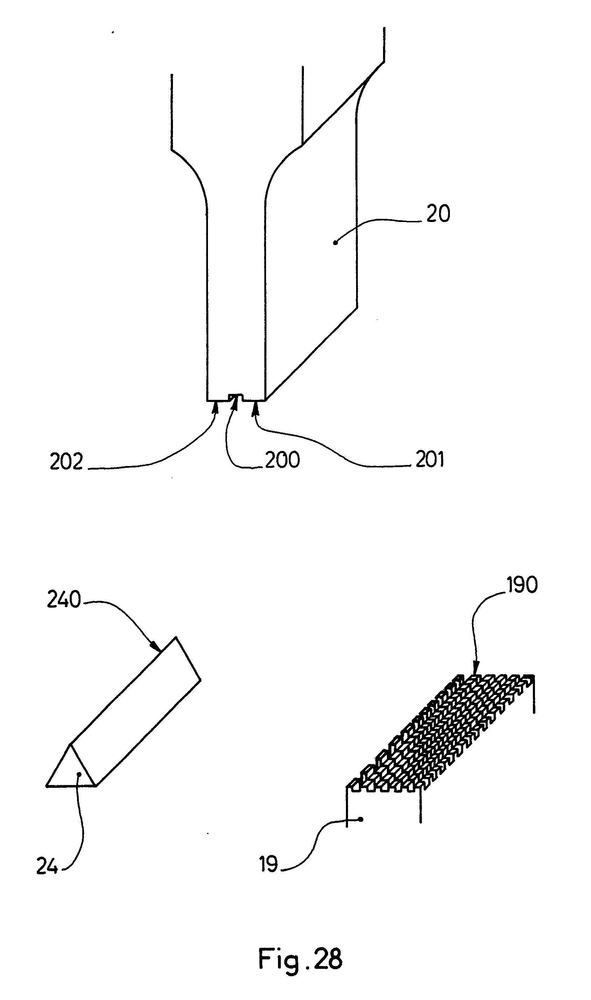

La figure 28 illustre les formes respectives de la première sonde ultrasonore 20, de l'enclume de soudure 19 et de l'enclume de coupe 24. On a représenté, sur cette figure, la sonde ultrasonore 20 comprenant une tête munie d'une rainure 200 centrale transversale à fond plat séparant deux portions planes 201 et 202 coplanaires. L'enclume de soudure 19 est une plaque horizontale à surface d'appui 190 généralement plane, de préférence munie de reliefs lui conférant un état de surface granuleux. L'enclume de coupe 24 comprend une arête transversale vive 240 conformée pour s'engager dans la rainure 200 de sonde ultrasonore 20 et venir porter par son arête contre le fond de la rainure 200.

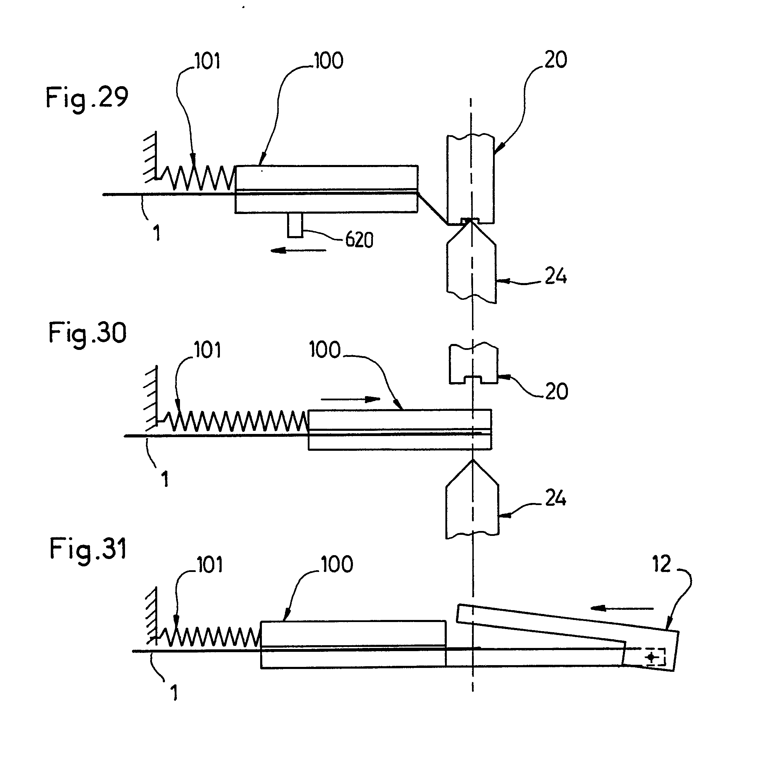

On a représenté sur les figures 29 à 31 le détail d'un mode particulier de réalisation des moyens permettant la coupe et l'insertion du ruban dans la pince d'étirement 12. Dans ce mode de réalisation, l'enclume de coupe 24 est disposée légèrement en dessous du plan horizontal selon lequel coulisse le ruban. Au moment de la coupe, représentée sur la figure 29, le ruban se trouve plié du fait du décalage entre le plan général du ruban et la position de l'enclume de coupe 24. On conçoit que, pour que la pince 12 prenne correctement le ruban, il faut redresser l'extrémité du ruban. Ce redressage s'effectue au moyen d'un tunnel de guidage 100, monté à coulissement longitudinal, et maintenant une portion de ruban dans le plan général de coulissement du ruban. Dans la position de coupe, représentée sur la figure 29, le tunnel de guidage est repoussé vers l'amont par le vérin 620 de support de seconde boucle 56, à l'encontre de la poussée exercée par un ressort 101. Après la coupe, la sonde ultrasonore 20 est escamotée vers le haut, et le tunnel de guidage 100 est déplacé vers l'aval sous l'action de la poussée du ressort 101 ou de tout moyen équivalent. Lors de ce mouvement, le tunnel de guidage 100 redresse l'extrémité du ruban. Sur la figure 31, lorsque la pince d'étirement 12 vient prendre le ruban, elle repousse le tunnel de guidage 100 vers l'amont à l'encontre de la poussée du ressort 101, la pince étant alors en position ouverte. Après fermeture de la pince 12, le ruban est correctement pincé et peut être étiré avec une grande fiabilité.

On comprend que le ruban une fois coupé se trouve redressé par le tunnel de guidage 100, et la pince peut toujours saisir ladite extrémité de ruban redressée sans que ce dernier ne puisse se replier sur lui-même.

Un dispositif similaire peut être utilisé également dans le second sous-ensemble de la machine selon l'invention, pour la coupe et la prise du ruban auxiliaire.

La présente invention n'est pas limitée aux modes de réalisation qui ont été explicitement décrits, mais elle en inclut les diverses variantes et généralisations contenues dans le domaine des revendications ci-après.

## Revendications

1 - Procédé de réalisation d'une bretelle de vêtement telle qu'une bretelle de soutien-gorge à partir d'une réserve de ruban (1) à dévidement longitudinal, d'une réserve de premières boucles à deux fentes (2) et d'une réserve de secondes boucles (3), caractérisé en ce qu'il comprend la succession des étapes suivantes :

a/ on introduit une première boucle à deux fentes (2) dans un support fixe horizontal de première boucle en disposant les fentes transversalement par rapport au sens de dévidement longitudinal (11) du ruban, et on introduit une seconde boucle (3) dans un support horizontal de seconde boucle approprié disposé en amont du support de première boucle à deux fentes,

b/ on attrappe, au moyen d'une pince mobile (12), la première extrémité (8) du ruban de réserve, et on déplace longitudinalement ladite pince mobile d'une distance fixe (L) déterminée pour faire passer le ruban (1) au dessus de la première boucle à deux fentes (2) et amener son extrémité au delà de ladite première boucle à deux fentes selon une longueur prédéfinie (D),

c/ on amène un doigt de maintien (13) en appui de haut en bas sur le ruban (1) pour le pincer contre la première fente (17) de première boucle à deux fentes (2),

d/ on desserre la pince (12) et on enfonce un premier doigt d'enfilage (14) de haut en bas dans la seconde fente (15) de première boucle à deux fentes (2) pour introduire la première extrémité (8) de ruban dans ladite seconde fente,

e/ on rabat cette première extrémité (8) de ruban sous la première boucle à deux fentes (2), on introduit l'extrémité rabattue dans la première fente (17) en enfonçant un second doigt d'enfilage (18) de bas en haut dans ladite première fente (17),

f/ on soude la première extrémité de ruban (1) sortant de la première fente sur la portion de ruban d'entrée entre une enclume de soudure (19) et une sonde ultrasonore (20) disposées au voisinage et en amont de la première boucle à deux fentes,

g/ on tire une longueur réglable de ruban au moyen d'un doigt transversal (21) mobile autour duquel passe une portion intermédiaire de ruban, la première extrémité de ruban étant retenue par la première boucle à deux fentes, le ruban de réserve étant freiné par un dispositif de freinage,

h/ on coupe le ruban, au moyen de la même sonde ultrasonore (20) que l'on a déplacée longitudinalement vers l'amont de la distance voulue, et on introduit par un doigt d'enfilage de seconde boucle (25) la seconde extrémité (26) de ruban, selon une longueur prédéfinie, dans la seconde boucle (3) maintenue horizontalement dans le support de seconde boucle,

i/ on effectue, entre la première boucle à deux fentes (2) et l'ensemble formé par le ruban (1) et la seconde boucle (3), un mouvement relatif de rotation d'axe transversal autour de la traverse centrale (6) de première boucle à deux fentes (2), pour dégager la première fente (17) de première boucle à deux fentes (2), et on amène la seconde extrémité (26) de ruban contre la face de première boucle à deux fentes par laquelle sort le ruban, au voisinage de la première fente (17),

j/ on amène un doigt de maintien (14) en appui sur le ruban pour le plaquer contre la seconde fente (15) de première boucle à deux fentes (2), et on enfonce un troisième doigt d'enfilage (13) dans la première fente (17) pour introduire la deuxième extrémité (26) de ruban dans ladite première fente, on rabat ladite seconde extrémité (26) de ruban de l'autre côté de ladite première boucle (2) en direction de la seconde fente (15), on introduit l'extrémité rabattue (26) dans la seconde fente (15) en enfonçant un quatrième doigt d'enfilage (28) dans ladite seconde fente,

k/ on éjecte l'ensemble ainsi réalisé.

2 - Procédé selon la revendication 1, caractérisé en ce qu'on produit ou on autorise le déplacement du doigt transversal (21) dans le sens produisant une détente du ruban (1), selon une distance appropriée, pendant l'insertion du quatrième doigt d'enfilage (28) dans la seconde fente (15).

3 - Procédé selon l'une des revendications 1 ou 2, caractérisé en ce que, entre les étapes e/ et f/, on tire le ruban (1) vers l'amont pour le faire coulisser autour de la traverse centrale (6) de première boucle à deux fentes (2) et ramener sa première extrémité (8) à proximité immédiate de la première boucle à deux fentes. (2).

4 - Procédé selon l'une quelconque des revendications 1 à 3, caractérisé en ce que, pendant l'étape h/, on amène un premier serre-flan (22) en appui sur le ruban pour le plaquer et le maintenir contre la seconde boucle (3) en aval de la fente de seconde boucle.

5 - Procédé selon l'une quelconque des revendications 1 à 4, caractérisé en ce que, entre les étapes j/ et k/, il comprend les étapes intermédiaires suivantes :

l/ on transfère les boucles (2, 3) latéralement sur deux supports mobiles respectifs (29, 30),

m/ on retourne de 180° le support mobile (29) de première boucle à deux fentes pour libérer la seconde extrémité (26) de ruban,

n/ on tire la seconde extrémité (26) de ruban avec un moyen de traction pour mettre la bretelle à longueur, tout en retenant la seconde boucle (3) à l'écart de la première boucle à deux fentes (2).

6 - Procédé selon l'une quelconque des revendications 1 à 5, caractérisé en ce que :
- au cours de l'étape g/, le doigt transversal (21) est déplacé longitudinalement par dessus la première boucle à deux fentes (2) entre une première position amont et une seconde position aval,
- l'étape i/ s'effectue par déplacement longitudinal de la seconde boucle (3) par dessus la première boucle à deux fentes (2) jusqu'à une position située en aval de la première boucle à deux fentes (2).

7 - Procédé selon la revendication 6, caractérisé en ce que, préalablement à l'étape n/, on déplace la nappe inférieure (110) de ruban à l'écart de la seconde extrémité (26) de ruban.

8 - Procédé selon l'une des revendications 6 ou 7, caractérisé en ce que :

o/ simultanément à l'étape n/, on retourne le support mobile (30) de seconde boucle de 180° pour amener la seconde boucle (3) en position d'enfilage,

p/ on amène sur la seconde boucle (3) un élément supplémentaire appelé TAB, et comportant un ruban auxiliaire (35), en disposant l'extrémité du ruban auxiliaire sur ladite seconde boucle,

q/ on introduit l'extrémité du ruban auxiliaire dans la fente de seconde boucle en enfilant un doigt d'enfilage auxiliaire (40) de haut en bas, on rabat ladite extrémité sous la seconde boucle par déplacement longitudinal d'un organe de rabattement (41), on soude ladite extrémité (38) de ruban auxiliaire (35) contre la portion d'entrée de ruban auxiliaire entre une enclume auxiliaire et une sonde ultrasonore auxiliaire, on coupe le ruban auxiliaire selon une longueur déterminée.

9 - Procédé selon la revendication 8, caractérisé en ce que l'organe de rabattement (41) est constitué par l'enclume auxiliaire, qui est mobile longitudinalement pour rabattre le ruban auxiliaire.

10 - Procédé selon l'une des revendications 8 ou 9, caractérisé en que, pendant l'étape q/, lors de l'introduction du ruban auxiliaire (35) dans la fente de seconde boucle, on amène un serre-flan (39) en appui sur le ruban auxiliaire pour le plaquer et le maintenir contre la seconde boucle.

11 - Machine mettant en oeuvre un procédé selon l'une quelconque des revendications 1 à 10, pour la réalisation d'une bretelle de vêtement telle qu'une bretelle de soutien-gorge, comprenant un bâti (50), une réserve de ruban (10), une réserve de premières boucles à deux fentes, une réserve de secondes boucles, un premier support horizontal (55) pour le maintien d'une première boucle à deux fentes, un premier support horizontal (56) pour le maintien d'une seconde boucle, des moyens pour amener des boucles à partir des réserves de boucles dans les supports de boucles, une pince mobile (12) actionnée par un moyen d'entraînement pour attraper l'extrémité de ruban en sortie de réserve de ruban et l'amener selon une trajectoire longitudinale au-delà du premier support (55) de première boucle à deux fentes, deux doigts supérieurs d'enfilage (13, 14) de ruban et deux doigts inférieurs d'enfilage (18, 28) de ruban, à déplacement vertical, disposés en regard des deux fentes de la première boucle (2) à deux fentes de part et d'autre de ladite boucle, des moyens pour entraîner les doigts d'enfilage en mouvements de translation verticale généralement perpendiculaire à la première boucle, des doigts (16) de rabattement pour rabattre l'extrémité de ruban sous la première boucle à deux fentes entre la seconde et la première fente, des moyens (19, 20) pour souder le ruban autour de la branche centrale de première boucle à deux fentes et des moyens (20, 24) pour couper le ruban, caractérisé en ce que :

- le premier support (55) de première boucle à deux fentes est fixe en position longitudinale sur le bâti (50),
- les moyens pour souder le ruban comprennent une sonde ultrasonore (20) mobile en déplacement longitudinal parallèlement à la direction (11) de déplacement du ruban entre une position de soudure dans laquelle la sonde ultrasonore (20) est disposée au voisinage du premier support (55) de première boucle à deux fentes en regard d'une enclume de soudage (19) et une position de coupe dans laquelle la sonde ultrasonore (20) est disposée au voisinage et en amont du premier support de seconde boucle (56) en regard d'une enclume de coupe (24), la même sonde ultrasonore (20) assurant successivement les fonctions d'organe de soudure et d'organe de coupe,
- un doigt horizontal transversal (21) à déplacement longitudinal est entraîné par des moyens d'entraînement longitudinal entre une première position dans laquelle le doigt (21) occupe une zone intermédiaire entre les deux premiers supports (55, 56) de boucles et une seconde position dans laquelle le doigt (21) est en aval du premier support (55) de première boucle à deux fentes, la seconde position du doigt transversal (21) étant réglable par déplacement longitudinal en fonction de la longueur de bretelle à réaliser.

12 - Machine selon la revendication 11, caractérisée en ce que les doigts d'enfilage supérieurs (13, 14) de ruban et la sonde ultrasonore (20) sont montés sur un chariot (57) coulissant sur des guides (58) longitudinaux du bâti, pour assurer le déplacement longitudinal nécessaire de la sonde ultrasonore (20) entre la position de soudure et la position de coupe.

13 - Machine selon la revendication 12, caractérisée en ce qu'elle comprend en outre un doigt d'enfilage de seconde boucle (25) et un premier presse-flan (22) montés sur ledit chariot (57), pour presser le ruban contre la seconde boucle (3) et l'introduire dans la fente de seconde boucle.

14 - Machine selon l'une quelconque des revendications 11 à 13, caractérisée en ce que :
- elle comprend en outre un support mobile de première boucle (29) et un support mobile de seconde boucle (30), déplaçables transversalement et destinés à recevoir les boucles éjectées respectivement hors du premier support de première boucle (55) et du premier support de seconde boucle (56),
- le support mobile (29) de première boucle à deux fentes est monté rotatif selon un axe transversal permettant le retournement de ladite première boucle à deux fentes selon 180°,
- des moyens de traction (34) permettent d'agripper l'extrémité pendante (26) du ruban de première boucle à deux fentes et de la tirer pour mettre la bretelle à la longueur désirée tandis que la seconde boucle est retenue dans son support mobile (30) de seconde boucle à l'écart de la première boucle à deux fentes.

15 - Machine selon la revendication 14, caractérisée en ce qu'elle comprend en outre une réserve de ruban auxiliaire (36), un doigt d'enfilage de ruban auxiliaire (40) en regard du support mobile (30) de seconde boucle, un organe de rabattement (41) pour rabattre l'extrémité de ruban auxiliaire au niveau du support mobile de seconde boucle, un dispositif de soudure à ultrasons (42, 43) disposé au voisinage du support mobile de seconde boucle, des moyens permettant de couper le ruban auxiliaire à la longueur désirée à l'écart du support mobile de seconde boucle, de façon à disposer dans la seconde boucle (3) un ruban auxiliaire (35).

16 - Machine selon la revendication 15, caractérisée en ce que le moyen de soudure à ultrasons disposé au voisinage du support mobile (30) de seconde boucle comprend une enclume auxiliaire (42) et une sonde ultrasonore auxiliaire (43), l'enclume auxiliaire (42) étant déplaçable longitudinalement sous le support mobile de seconde boucle pour remplir alternativement la fonction d'enclume auxiliaire pour la soudure et la fonction d'organe de rabattement pour le rabat de l'extrémité du ruban auxiliaire en regard du support mobile de seconde boucle.

17 - Machine selon l'une quelconque des revendications 14 à 16, caractérisée en ce que le support mobile de seconde boucle (30) est monté rotatif selon un axe transversal permettant le retournement de ladite seconde boucle selon 180°.

18 - Machine selon l'une quelconque des revendications 11 à 17, caractérisée en ce que l'enclume de coupe (24) est associée à un tunnel de guidage (100) horizontal coulissant, monté à coulissement longitudinal entre une position de coupe dans laquelle le tunnel est écarté pour laisser l'accès à l'enclume de coupe (24) pour couper le ruban, et une position de maintien dans laquelle le tunnel recouvre l'enclume de coupe (24) et redresse le ruban.

19 - Machine selon l'une quelconque des revendications 11 à 18, caractérisée en ce que :
- la sonde ultrasonore (20) comprend une tête munie d'une rainure centrale transversale à fond plat séparant deux portions planes coplanaires,
- l'enclume de soudure (19) est une plaque horizontale généralement plane,
- l'enclume de coupe (24) comprend une arête transversale vive conformée pour s'engager dans la rainure de sonde ultrasonore (20) et venir porter par son arête contre le fond de la rainure.

20 - Machine selon l'une quelconque des revendications 11 à 19, caractérisée en ce que le doigt horizontal transversal (21) d'étirement est monté en bout d'une tige longitudinale (210) coulissant dans le chariot (630) d'entraînement du doigt, la tige étant associée à un ressort (211) la repoussant vers l'amont, de sorte que le doigt horizontal d'étirement (21) peut être repoussé vers l'aval par le support de seconde boucle (56).

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

FIG. 16

Fig.17

Fig.18

Fig.19

Fig.20

Fig.21

Fig.22

Fig.23

Fig.24

Fig.25

EP 0 369 898 A1

Fig.26

Fig.27

20

202        200        201

240

24

190

19

Fig.28

Fig.29

Fig.30

Fig.31

Fig. 32

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-1547578 (CANADIAN LADY-CANADELLE INC.) <br> * page 1, lignes 10 - 46 * <br> * page 3, ligne 38 - page 4, ligne 47 * <br> * page 10, ligne 50 - page 12, ligne 79; figures 1-27 * | 1, 11 | A41H37/08 |
| A | US-A-3587947 (CH. BLOCK) <br> * colonne 1, ligne 60 - colonne 3, ligne 72; revendications 1-7; figures 1-15 * | 1, 11 | |
| A,D | FR-A-2515009 (SOFOMEC) <br> * page 2, ligne 11 - page 6, ligne 16; figures 1-16 * | 1, 11 | |
| A | FR-A-2420311 (TRIUMPH INTERNATIONAL AG.) <br> * page 2, ligne 23 - page 6, ligne 4; figures 1-7 * | 1, 11 | |
| E | FR-A-2631788 (A.T.A.M.E.C. CROZET FOURNEYRON) <br> * le document en entier * | 1, 3, 5, 6, 8, 10-17 | |

DOMAINES TECHNIQUES RECHERCHES (Int. Cl.5 )

A41H
D05B

Le présent rapport a été établi pour toutes les revendications

| Lieu de la recherche | Date d'achèvement de la recherche | Examinateur |
|---|---|---|
| LA HAYE | 01 MARS 1990 | GARNIER F.M.A.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)